# EUROPÄISCHE PATENTANMELDUNG

(11) **EP 4 130 697 A1**
(43) Veröffentlichungstag der Anmeldung: **08.02.2023**
(21) Anmeldenummer: 21190041.0
(22) Anmeldetag: 06.08.2021
(51) Int. Cl.: G01L 5/00

(54) **VORRICHTUNG ZUR MESSUNG EINER DRUCKKRAFT UND HERSTELLUNGSVERFAHREN FÜR DIE VORRICHTUNG**

(71) Anmelder: Siemens Aktiengesellschaft, 80333 München (DE)
(72) Erfinder: Silva, Diego, 81541 München (DE); Stegmeier, Stefan, 81825 München (DE); Weisbrod, Erik, 81369 München (DE)

(57) **Zusammenfassung**

Es wird eine Vorrichtung (1) zur Detektion einer von außen auf die Vorrichtung (1) einwirkenden Druckkraft (F) angegeben,
- wobei die Vorrichtung (1) eine elektrisch nichtleitende Trägerschicht (10) und wenigstens ein taktiles Sensorelement (20) umfasst,
- wobei das taktile Sensorelement (20) eine erste Elektrode (21) und eine zweite Elektrode (22) aufweist,
- wobei die erste Elektrode (21) auf der Trägerschicht (10) aufgebracht ist,
- wobei die erste Elektrode (21) auf ihrer von der Trägerschicht (10) abgewandten Seite von einem kuppelartigen Verformungselement (22) umgeben ist,
- wobei das kuppelartige Verformungselement (22) aus einem reversibel verformbaren Material gebildet ist, welches die zweite Elektrode (22) ausbildet oder die zweite Elektrode auf ihrer Innenseite trägt,
- so dass die Einwirkung einer Druckkraft (F) auf das kuppelartige Verformungselement (22) einen reversiblen Kontaktschluss zwischen der ersten Elektrode (21) und der zweiten Elektrode (22) bewirken kann.

Weiterhin wird ein Verfahren zur Herstellung einer solchen Vorrichtung (1) angegeben.

## Beschreibung

Die vorliegende Erfindung betrifft eine Vorrichtung zur Detektion einer von außen auf die Vorrichtung einwirkenden Druckkraft, wobei die Vorrichtung eine elektrisch nichtleitende Trägerschicht und wenigstens ein taktiles Sensorelement umfasst. Das wenigstens eine Sensorelement weist zwei Elektroden auf, die durch Einwirkung der Druckkraft miteinander in elektrischen Kontakt gebracht werden können. Weiterhin betrifft die Erfindung ein Verfahren zur Herstellung einer solchen Vorrichtung.

Aus dem Stand der Technik sind unterschiedliche Arten von taktilen Sensoren bekannt, welche beispielsweise im Bereich der Automatisierung dazu dienen können, die Interaktion zwischen Menschen und Maschinen zu unterstützen. So können beispielsweise Oberflächen von Robotern und anderen Geräten mit Sensoren versehen sein, um Kollisionen oder andere Berührungen zu erkennen, um Nutzer-Eingaben zu ermöglichen oder auch um das maschinelle Greifen eines Roboters zu unterstützen. Die entsprechende Funktionalisierung kann nach dem Stand der Technik zum Beispiel dadurch erreicht werden, dass eine vorgefertigte flexible Sensor-Matte oder Sensor-Folie auf die entsprechende Geräte-Oberfläche aufgebracht wird. Auf diese Weise können auch unebene Oberflächen mit konvexen oder konkaven Geometrien mit einer taktilen Sensor-Funktionalität versehen werden. Bei den meisten bekannten Sensor-Matten oder Sensor-Folien ist diese Anpassungsfähigkeit jedoch auf relativ grobe Konturen beschränkt. Die entsprechende Funktionalisierung von stark konturierten und komplex geformten Oberflächen stellt weiterhin eine Herausforderung dar.

Ein bekanntes Messprinzip für eine resistive Sensor-Matte basiert auf zwei flexiblen flächigen Elektroden, die durch einen deformierbaren Abstandshalter beabstandet sind. Ein soleher Abstandshalter kann z.B. aus einer perforierten Schaumstoffschicht gebildet sein, die in bestimmten Abständen Löcher aufweist. Wenn diese Sensor-Matte im Bereich eines solchen Lochs zusammengedrückt wird, kann es zu einem Kurzschluss zwischen den beiden Elektroden kommen, der dann als elektrisches Signal gemessen wird.

Ein weiterer bekannter taktiler Schichtsensor wird in der Patentanmeldung US 2021/0027955A1 beschrieben. Der dortige Aufbau weist ein flexibles Substrat mit ein oder mehreren deformierbaren Körpern auf, die jeweils Elektroden tragen. Als Reaktion auf eine einwirkende Druckkraft können die Körper ihre Form ändern, so dass entweder die vorher beabstandeten Elektroden in Kontakt gebracht werden oder die vorher in Kontakt befindlichen Elektroden auseinander bewegt werden. So wird ebenfalls aufgrund der Druckkraft ein elektrischer Kontakt erzeugt oder unterbrochen. Die deformierbaren Körper werden z.B. durch ein 3D-Druckverfahren erzeugt. Sie weisen z.B. ein T-förmiges Querschnittsprofil oder ein Profil einer auf der Spitze stehenden Pyramide auf. Bei diesen Geometrien führt die Einwirkung einer Druckkraft senkrecht zur Substratebene zu einem Kontaktschluss zwischen benachbarten Elementen in der lateralen Richtung, also parallel zur Substratebene. Die Kontaktschlussrichtung ist daher im Wesentlichen senkrecht zur typischen Einwirkungsrichtung der Druckkraft. Dies hat zur Folge, dass eine Druckkraft in ausreichender Höhe zwar einen Kontaktschluss bewirken kann, dass aber die Schwelle für die Kraft, bei der dies stattfindet, nicht besonders reproduzierbar und nicht besonders präzise definiert ist. Mit anderen Worten kann ein solches Bauteil zwar als taktil bedienbarer Schalter verwendet werden, aber es ist ungeeignet, um das Erreichen eines bestimmten Wertes der einwirkenden Druckkraft mit hoher Präzision zu messen. Ein weiterer Nachteil der hier beschriebenen Strukturen liegt darin, dass durch die laterale Beabstandung der einzelnen deformierbaren Körper eine Versiegelung des Bauteils schwierig ist. Wenn dieses Bauteil mit einer Deckschicht versehen würde, um die einzelnen Elemente vor Umgebungseinflüssen zu schützen, dann bestünde die Gefahr, dass die laterale Beweglichkeit der einzelnen deformierbaren Körper beeinträchtigt würde. Wenn die Deckschicht in die Zwischenräume eindringen würde, könnte die Schalt-Funktionalität sogar vollständig verloren gehen. Insgesamt würde also die Zuverlässigkeit beeinträchtigt. Ohne eine derartige Deckschicht wäre das Bauteil dagegen sehr empfindlich gegenüber Umgebungseinflüssen.

Eine weitere bekannte Alternative stellt die Bestückung der zu funktionalisierenden Oberfläche mit einer Vielzahl von einzelnen Drucksensoren dar. Dies ist jedoch sehr aufwendig, sowohl in Bezug auf die Anzahl der benötigten Bauteile als auch in Bezug auf die Komplexität des Herstellungsverfahrens beim Zusammensetzen der einzelnen Elemente.

Aufgabe der Erfindung ist es daher, eine Vorrichtung zur Detektion einer von außen einwirkenden Druckkraft anzugeben, welche die genannten Nachteile überwindet. Insbesondere soll eine Vorrichtung zur Verfügung gestellt werden, die das Überschreiten eines vorgegebenen Schwellwerts für die Druckkraft präzise und zuverlässig detektieren kann und die außerdem relativ einfach herstellbar ist und robust ausgeführt werden kann. Insbesondere soll auch eine leichte Anpassung der Vorrichtung an komplex geformte Oberflächen möglich sein. Eine weitere Aufgabe ist es, ein Verfahren zur Herstellung einer entsprechenden Vorrichtung anzugeben.

Diese Aufgaben werden durch die in Anspruch 1 beschriebene Vorrichtung und das in Anspruch 11 beschriebene Herstellungsverfahren gelöst.

Die erfindungsgemäße Vorrichtung dient zur Detektion einer von außen auf die Vorrichtung einwirkenden Druckkraft. Die Vorrichtung umfasst eine elektrisch nichtleitende Trägerschicht und wenigstens ein taktiles Sensorelement. Das taktile Sensorelement weist eine erste Elektrode und eine zweite Elektrode auf. Die erste Elektrode ist auf der Trägerschicht aufgebracht, und sie ist auf ihrer von der Trägerschicht abgewandten Seite von einem kuppelartigen Verformungselement umgeben. Dieses kuppelartige Verformungselement ist aus einem reversibel verformbaren Material gebildet, welches entweder selbst die zweite Elektrode ausbildet oder welches die zweite Elektrode auf ihrer Innenseite trägt, so dass die Einwirkung einer Druckkraft auf das kuppelartige Verformungselement einen reversiblen Kontaktschluss zwischen der ersten Elektrode und der zweiten Elektrode bewirken kann.

Es handelt sich also um einen resistiven taktilen Sensor, bei dem ähnlich wie bei der Vorrichtung der US 2021/0027955A1 durch Einwirkung einer äußeren Druckkraft zwei Elektroden miteinander in elektrischen Kontakt gebracht werden können. Die Entstehung dieses Kurzschlusses kann dann in grundsätzlich bekannter Weise als elektrisches Signal gemessen werden. Dabei wird die sprunghafte Änderung des Widerstands beim Kontaktschluss zwischen den beiden Elektroden gemessen.

Der elektrische Kontakt zwischen den beiden Elektroden kommt bei einer Überschreitung einer vorbestimmten Schwelle für die Druckkraft zustande. Bei der erfindungsgemäßen Vorrichtung kann dieser Schwellwert besonders präzise eingestellt werden, und es kann von Vorrichtung zu Vorrichtung bzw. zwischen mehreren Sensorelementen einer Vorrichtung eine hohe Reproduzierbarkeit dieses Schwellwerts erreicht werden. Dies liegt daran, dass bei der erfindungsgemäßen Vorrichtung ein Kontaktschluss zwischen einer ersten, inneren Elektrode (die auf der Trägerschicht liegt) und einer zweiten, äußeren Elektrode (die die innere Elektrode im Querschnittsprofil kuppelartig umgibt) zustande kommt. Dadurch liegt die wesentliche Kontaktschlussrichtung zwischen den beiden Elektroden senkrecht zur Oberfläche des Bauteils (also senkrecht zur lokalen Oberfläche der Trägerschicht). Die einwirkende Druckkraft liegt typischerweise ebenfalls senkrecht zu dieser lokalen Oberfläche oder hat zumindest eine hohe Richtungskomponente senkrecht zu dieser Oberfläche. Daraus folgt, dass die Kontaktschlussrichtung beim typischen Anwendungsfall im Wesentlichen parallel zur Kraftrichtung liegt oder zumindest einen spitzen Winkel mit der Kraftrichtung einschließt. Jedenfalls liegt sie nicht senkrecht zur Kraftrichtung wie in der oben beschriebenen US 2021/0027955A1. Daraus ergibt sich der wesentliche Vorteil, dass die Kraftschwelle, bei der der Kontaktschluss erreicht wird, wesentlich präziser eingestellt werden kann und der Schaltpunkt somit reproduzierbarer ist als beim genannten Stand der Technik.

Die für den Kontaktschluss notwendige Beweglichkeit wird durch das kuppelartige Verformungselement bereitgestellt. Dieses kann entweder selbst die zweite Elektrode ausbilden, oder es kann auf seiner Innenseite die zweite Elektrode tragen (z.B. als innenliegende Beschichtung). Ein solches kuppelartiges Verformungselement ist durch einen Druckprozess vergleichsweise einfach herstellbar, so dass die Vorrichtung insgesamt mit geringem Fertigungsaufwand erzeugt werden kann. Ein solcher Druckprozess ermöglicht es auch, die Form der Vorrichtung an komplex geformte Oberflächen anzupassen.

Ein weiterer Vorteil der erfindungsgemäßen Vorrichtung liegt darin, dass die erste Elektrode nach außen hin von dem kuppelartigen Verformungselement nahezu vollständig umschlossen sein kann. So kann die erste Elektrode insbesondere auf einem überwiegenden Teil ihrer Länge von dem kuppelartigen Verformungselement überdacht sein. Der Innenraum der Kuppel ist damit bereits durch das Verformungselement selbst vor Umgebungseinflüssen geschützt. Zusätzlich kann bei dieser nach oben hin abgeschlossenen Geometrie relativ leicht eine zusätzliche flexible Schutzschicht aufgebracht werden, ohne dass dadurch eine Relativbewegung zwischen den beiden Elektroden beeinträchtigt wird. Dadurch kann die erfindungsgemäße Vorrichtung auch sehr robust ausgestaltet werden.

Das erfindungsgemäße Verfahren dient zur Herstellung einer erfindungsgemäßen Vorrichtung und weist zumindest den folgenden Schritt auf:
a) Aufbringung des kuppelartigen Verformungselements auf die Trägerschicht mittels eines Druckprozesses.

Die Vorteile dieses Verfahrens ergeben sich analog zu den oben beschriebenen Vorteilen der Vorrichtung. Insbesondere wird damit ein besonders einfacher Herstellungsmöglichkeit für das Verformungselement angegeben, welcher auch eine Anpassung an komplex geformte Oberflächen erlaubt.

Vorteilhafte Ausgestaltungen und Weiterbildungen der Erfindung gehen aus den von den Ansprüchen 1 und 11 abhängigen Ansprüchen sowie der folgenden Beschreibung hervor. Dabei können die beschriebenen Ausgestaltungen der Vorrichtung und des Herstellungsverfahrens allgemein vorteilhaft miteinander kombiniert werden.

Gemäß einer allgemein besonders bevorzugten Ausführungsform ist die zweite Elektrode des wenigstens einen Sensorelements durch das kuppelartige Verformungselement des Sensorelements gebildet. Mit anderen Worten ist bei dieser Ausführungsform das Verformungselement aus einem leitfähigen Material gebildet, welches neben der mechanischen Funktion als Verformungselement gleichzeitig die elektrische Funktion als Kontaktelektrode erfüllt. Eine solche Vorrichtung ist besonders einfach herzustellen, indem das leitfähige Material des Verformungselements, das diese Doppelfunktion erfüllt, mittels eines Druckprozesses auf die Trägerschicht aufgebracht wird. Das kuppelartige Element kann dann nämlich vorteilhaft aus einem einheitlichen Material gebildet sein, was eine Aufbringung mit additiven Fertigungsverfahren wesentlich erleichtert.

Es ist jedoch nicht zwingend, dass der mechanisch tragende Teil des Verformungselements gleichzeitig die zweite Elektrode ausbildet. Alternativ kann die zweite Elektrode auch beispielsweise durch eine leitfähige Beschichtung auf der Innensite des kuppelartigen Verformungselements gebildet sein. Oder das Verformungselement kann aus zwei Teilelementen zusammengesetzt sein, insbesondere einem äußeren, mechanisch tragenden Teilelement und einem inneren, elektrisch leitfähigen Teilelement. Auch bei dieser Ausführungsform ist eine Aufbringung des Verformungselements mit einem Druckprozess grundsätzlich möglich, es müssen dann nur zwei verschiedene Materialien gedruckt werden, um das Verformungselement zu erzeugen.

Allgemein kann also das kuppelartige Verformungselement aus einem gedruckten reversibel verformbaren Material gebildet sein. Wie oben beschrieben, kann dieses gedruckte Material entweder einheitlich sein oder aus mehreren Komponenten zusammengesetzt sein, die ggf. auf mehrere Teilelement verteilt sind.

Besonders vorteilhaft kann das Verformungselement elastisch verformbar sein, so dass es nach Wegfall der einwirkenden Druckkraft im Wesentlichen in seine Ursprungsform zurückkehrt und somit der Kontaktschluss zwischen den beiden Elektroden wieder aufgehoben wird, wenn die einwirkende Druckkraft einen Schwellwert unterschreitet. Hierzu kann das Verformungselement eine elastische oder zumindest teil-elastische Materialkomponente aufweisen, die insbesondere durch ein Druckverfahren aufgebracht sein kann, um das Verformungselement zu erzeugen.

Gemäß einer allgemein vorteilhaften Ausführungsform kann das kuppelartige Verformungselement aus einem mehrschichtig gedruckten Aufbau des reversibel verformbaren Materials gebildet sein. Mit anderen Worten kann das Verformungselement durch einen mehrstufigen Druckprozess erzeugt sein. Jede Einzelschicht dieses Aufbaus ist dabei so strukturiert, dass sich insgesamt die kuppelartige Form ergibt. Dabei können auch mehrere kuppelartige Verformungselemente in einem gemeinsamen Druckprozess gleichzeitig erzeugt werden, insbesondere wenn die Vorrichtung eine Vielzahl von ähnlichen Sensorelementen aufweist. Vorteilhaft kann die Strukturierung der Einzelschichten dadurch erreicht werden, dass jede Einzelschicht aus einem oder mehreren raupenartigen Teilelementen zusammengesetzt ist. Diese raupenartigen Teilelemente können beispielsweise durch das Dispensen einer Paste erzeugt werden, wobei eine solche Auftragungsform in der Fachwelt auch als Dispenserraupe bezeichnet wird. Sie ist allgemein durch eine längliche Form mit im Wesentlichen einheitlicher Querschnittsform und -größe gekennzeichnet. Die einzelnen raupenartigen Teilelemente müssen dabei allerdings untereinander nicht genau gleich sein. Beispielsweise kann die Auftragung komplexer Geometrien, wie hier für das Verformungselement, dadurch erleichtert werden, dass die einzelnen Raupen bei Bedarf unterschiedlich hoch und/oder unterschiedlich breit aufgetragen werden. Insbesondere kann die Breite bzw. Höhe von Schicht zu Schicht unterschiedlich gewählt werden. In der fertigen Vorrichtung ist das gedruckte Verformungselement dann ausgehärtet und mechanisch stabil (mit der beschriebenen reversiblen Verformbarkeit), wobei die einzelnen Teilschichten und Teilelemente zusammen einen freitragenden Verbund ausbilden. Die zugrundeliegenden Teilschichten und die einzelnen Raupenelemente ist aber auch in diesem fertigen Bauteil an der Feinkontur erkennbar.

Wie oben bereits erwähnt, kann das gedruckte reversibel verformbare Material allgemein ein elektrisch leitfähiges Material sein oder zumindest eine leitfähige Materialkomponente umfassen. Dieses leitfähige gedruckte Material kann insbesondere eine leitfähige Paste sein, beispielsweise eine leitfähige Silikonpaste, die auch als Silikonleitkleber bezeichnet wird. In einem solchen Silikonleitkleber ist ein Basismaterial aus einem Silikon-Polymer mit einem anorganischen leitfähigen Füllstoff gefüllt, häufig mit metallischen Partikeln. Es kommen aber auch andere Leitpasten in Frage, bei denen andere verformbare Polymere mit leitfähigen Füllstoffen gefüllt sind, insbesondere thermoplastische Elastomere (TPE) wie z.B. TPU (thermoplastische Elastomere auf Urethanbasis) oder TPC (thermoplastische Copolyesterelastomere), und flexible leitfähige Epoxidkleber.

Optional kann auch die erste Elektrode durch einen Druckprozess gebildet sein und insbesondere innerhalb desselben Prozessschritts aufgebracht werden wie die zweite Elektrode. Sie kann entsprechend auch aus demselben leitfähigen Material gebildet sein. Alternativ können das Material der ersten Elektrode sowie das Aufbringungsverfahren aber auch unterschiedlich gewählt sein, da bei der ersten Elektrode keine Verformbarkeit erforderlich ist. So kann diese erste Elektrode auch eine metallische Elektrode sein.

Gemäß einer allgemein vorteilhaften Ausführungsform kann das wenigstens eine Sensorelement insgesamt eine längliche Form aufweisen, wobei die erste Elektrode als längliche Leiterbahn ausgebildet ist und das Verformungselement die erste Elektrode nach Art einer Tunnelröhre umgibt. Bei dieser länglichen Ausgestaltung kann - ähnlich wie bei einem Wellblechdach - auch bei vergleichsweise geringer Materialstärke eine Eigenstabilität und gleichzeitig eine reversible Verformbarkeit der Tunnelröhre erreicht werden, was eine reversible Kontaktierung der beiden Elektroden ermöglicht. Das halbröhrenförmige Verformungselement kann bei dieser Ausführungsform die erste Elektrode in vertikaler Richtung (also senkrecht zur Trägerschicht-Ebene) auf einem Großteil ihrer Länge abdecken. Da der Hohlraum des Tunnels in dieser Richtung abgeschlossen ist, ist die erste Elektrode daher weitgehend vor äußeren Umgebungseinflüssen geschützt. Die beiden Tunnelenden können dabei entweder offenliegen oder ebenfalls abgeschlossen sein, beispielsweise durch eine zusätzliche Schutzschicht. Die geschlossene Variante ist allgemein zu bevorzugen, da hierdurch eine besonders robuste Vorrichtung erhalten wird.

Die Querschnittsform des tunnelartigen Verformungselements kann unterschiedlich ausgestaltet sein. So kann das Verformungselement auf seiner Außenseite (also im Bereich des Tunneldachs) z.B. entweder rund sein oder auch spitz zulaufen. Bei beiden Varianten ist prinzipiell eine reversible Verformbarkeit mit Kontaktschluss zur innenliegenden ersten Elektrode möglich.

Auch ist die beschriebene längliche Form des Sensorelements nicht zwingend. Alternativ können die Verformungselemente beispielsweis auch vollständig geschlossene runde Kuppeln darstellen, welche die innenliegende erste Elektrode nach Art eines Iglus umgeben. Bei einer entsprechend elastischen Ausgestaltung des Materials ist auch hier eine ausreichende reversible Verformbarkeit möglich.

Allgemein vorteilhaft und unabhängig von der genauen Geometrie des kuppelartigen Verformungselements kann dieses auf seiner Außenseite von einer durchgehenden Schutzschicht bedeckt sein. Unter der Außenseite wird hier die von der ersten Elektrode und damit von der Trägerschicht abgewandte Seite verstanden. Durch eine solche Schutzschicht ist die Vorrichtung nach außen hin - also in die Richtung, von der auch die Druckkraft einwirkt - vor schädigenden Umgebungseinflüssen geschützt. Sie kann insbesondere die Vorrichtung vor unerwünschten chemischen und mechanischen Einflüssen schützen. Gemäß einer vorteilhaften Ausführungsvariante kann die Schutzschicht aus einem elektrisch nichtleitenden Material gebildet sein. Bei dieser Variante ist zusätzlich ein Schutz vor unerwünschten Kurzschlüssen durch einen Kontakt mit außenliegenden elektrisch leitfähigen Elementen gegeben. Die Verwendung eines nichtleitenden Materials für die Schutzschicht ist allgemein dann nötig, wenn die Schutzschicht sowohl die erste Elektrode als auch die zweite Elektrode berührt, da sie sonst einen unerwünschten Kurzschluss zwischen den beiden Elektroden vermitteln würde. Wenn die Schutzschicht die innenliegende Elektrode nicht berührt, kann sie alternativ auch aus einem leitfähigen Material gebildet sein.

Die außenliegende Schutzschicht ist vorteilhaft ebenfalls aus einem reversibel verformbaren Material gebildet, so dass die Flexibilität des Verformungselements durch die Umhüllung nicht wesentlich beeinträchtigt wird. Beispielsweise kann die Schutzschicht aus einem nichtleitenden Polymer, insbesondere aus einem nichtleitenden Silikon, gebildet sein. Im Falle der oben beschriebenen tunnelartigen Ausgestaltung des Verformungselements kann die Schutzschicht optional auch die beiden Tunnelenden abdichten, so dass die Tunnelröhre insgesamt gegen die äußere Umgebung abgeschlossen ist.

Die außenliegende Schutzschicht kann vorteilhaft eine durchgehende Versiegelung der gesamten Vorrichtung bilden. Mit anderen Worten kann auch in den Fällen, in denen die Vorrichtung eine Vielzahl von Sensorelementen aufweist, diese Vielzahl von Verformungselementen durch die übergeordnete Schutzschicht gemeinsam abgedeckt sein.

Die durchgehende Schutzschicht kann beispielsweise durch Auflaminieren einer Polymerfolie oder auch durch Aushärtung eines flüssigen Materialfilms gebildet sein, wobei ein solcher flüssiger Film z.B. durch Aufsprühen oder durch einen Druckprozess abgeschieden werden kann.

Allgemein vorteilhaft kann die Vorrichtung eine Mehrzahl von taktilen Sensorelementen umfassen, wobei insbesondere jedes dieser Sensorelemente auf die beschriebene Weise aufgebaut ist. Zum einen kann durch eine solche Vielzahl von Sensorelementen eine ortsaufgelöste Detektion der Druckkraft ermöglicht werden. Es kann sich also mit anderen Worten um einen pixelierten taktilen Sensor handeln, wobei die einzelnen ortsauflösenden Sensor-Pixel insbesondere untereinander gleich ausgestaltet sein können. Alternativ oder zusätzlich zu einer solchen Ortsauflösung können die einzelnen Sensorelemente aber auch unterschiedliche Empfindlichkeiten aufweisen. Es kann also eine geometrische Variation zwischen den einzelnen Sensorelementen vorliegen, die zu unterschiedlichen Schwellwerten für die Druckkraft führt, bei der ein Kontaktschluss stattfindet. Auf diese Weise kann eine genauere quantitative Bestimmung der einwirkenden Kraft ermöglicht werden, zumindest wenn die Kraft großflächig genug einwirkt, dass sie sich auf mehrere nebeneinanderliegende Sensorelemente auswirkt. Die ortsauflösende Variante kann auch mit einer gezielten Variation der Empfindlichkeit kombiniert werden: So kann beispielsweise die gesamte Vorrichtung in mehrere ortsauflösende (und untereinander gleiche) Sensor-Pixel unterteilt sein, wobei jedes Sensor-Pixel dann wiederum in Sub-Pixel unterteilt ist. Jedes Sub-Pixel kann dann eine Mehrzahl von Sensorelementen aufweisen, welche untereinander eine Variation in ihren Schwellwerten und somit in ihrer Empfindlichkeit aufweisen.

Gemäß einer weiteren allgemein vorteilhaften Ausführungsform der Vorrichtung kann diese eine unebene und/oder reversibel verformbare Trägerschicht aufweisen. Eine solche unebene Trägerschicht kann beispielsweise eine starre Außenfläche eines komplex geformten Geräts sein, z.B. eines Roboters. Die erfindungsgemäße Vorrichtung kann relativ einfach an eine solche komplexe Außenfläche angepasst werden, insbesondere wenn die zweite Elektrode durch ein Druckverfahren direkt darauf aufgedruckt wird. Durch entsprechende Höhenanpassung des verwendeten Druckkopfs können auch komplexe Formen mit den nötigen Verformungselementen versehen werden. Alternativ zu einer solchen Direktbeschichtung kann die Trägerschicht aber auch eine zusätzliche flexible Schicht sein, z.B. eine flexible Folie, auf der die übrigen Elemente der Sensor-Vorrichtung aufgebracht werden. Diese Folie kann dann zusammen mit den darauf aufgebrachten Elementen nach Art einer Sensorhaut auf ein komplex geformtes Gerät aufgebracht werden. So wird allgemein durch die Erfindung eine Anpassung an unebene Außenkonturen ermöglicht.

Die erfindungsgemäße Vorrichtung kann in einer Vielzahl von möglichen Anwendungen zum Einsatz kommen. Beispielsweise kann es sich um eine Sensor-Vorrichtung eines Roboters handeln. So kann insbesondere ein kollaborativer Roboter (auch als "Cobot" bezeichnet), auf seiner Außenfläche mit einer Funktionalität zur automatischen Erkennung von Berührungen oder Kollisionen ausgestattet sein. Dies kann erheblich zur Sicherheit beitragen, wenn Roboter und Menschen in einem gemeinsamen Arbeitsbereich tätig sind. Alternativ kann die Sensor-Vorrichtung auch in einem Greifwerkzeug eines Roboters zum Einsatz kommen, insbesondere um die Greiffunktion durch ein Feedback von Informationen zur einwirkenden Druckkraft zu optimieren. Mit anderen Worten kann die Sensor-Vorrichtung allgemein die Funktionalität des maschinellen Fühlens in einem Roboter zur Verfügung stellen. Dabei kommen die oben beschriebenen Vorteile der Erfindung im Zusammenhang mit der Möglichkeit einer quantitativen Bestimmung der Druckkraft besonders wirksam zum Tragen. Alternativ oder zusätzlich kann die Vorrichtung aber auch dazu verwendet werden, eine Schnittstelle für Benutzer-Eingaben zur Verfügung zu stellen. Sie kann also mit anderen Worten als taktiles Eingabegerät ausgestaltet sein, also z.B. als Touchpad oder Touchpanel.

Gemäß einer vorteilhaften Ausführungsform des Verfahrens kann der in Schritt a) angewendete Druckprozess ein Dispens-Prozess, ein Inkjet-Prozess oder ein Aerosol-Jet-Prozess sein. Diese Verfahren sind besonders geeignet, um Druckpasten in Raupen- oder Tropfenform aufzubringen. Alternativ können aber auch Schablonendruck oder Siebdruck oder andere Druckprozesse mit einer Maskierung zum Einsatz kommen.

Allgemein kann auch die erste Elektrode innerhalb des Schritts a), also gemeinsam mit dem Verformungselement, mit demselben Druckverfahren aufgebracht werden. Alternativ kann die erste Elektrode aber auch in einem vorhergehenden Schritt und insbesondere mit einem unterschiedlichen Verfahren auf die Trägerschicht aufgebracht werden.

Gemäß einer vorteilhaften Ausführungsform kann der Druckprozess in Schritt a) in mehrere Teilschritte aᵢ) unterteilt sein, wobei in jedem Teilschritt aᵢ) eine Teilschicht eines mehrschichtigen Verformungselements aufgedruckt wird. Insbesondere kann dann jede Teilschicht zumindest angehärtet werden, bevor die nachfolgende Teilschicht aufgebracht wird. Auf diese Weise sind die untenliegenden Schichten stabil genug, um die nachfolgenden Schichten des Verformungselements zu tragen. Ein solches Anhärten kann beispielsweise entweder thermisch und/oder durch die Einwirkung von UV-Strahlung erreicht werden. Wenn alle Teilschichten aufgetragen sind, kann das gebildete Verformungselement als Ganzes vollständig ausgehärtet werden, wodurch sich dann die endgültigen mechanischen Eigenschaften des Verformungselements ausbilden. Grundsätzlich ist es auch möglich, dass jede Teilschicht schon vor dem Aufbringen der nachfolgenden Teilschicht vollständig ausgehärtet wird. Ein solcher Prozess ist jedoch wesentlich zeitintensiver als die vorab beschriebene Anhärtung der Teilschichten.

Gemäß einer vorteilhaften Ausführungsvariante kann die Trägerschicht eine außenliegende nichtleitende Schicht eines übergeordneten Geräts sein. Dann kann in Schritt a) des Verfahrens die Aufbringung des Verformungselements direkt auf diese außenliegende Schicht des übergeordneten Geräts erfolgen. In diesem Fall können auch die erste Elektrode und optional vorliegende weitere Elemente des jeweiligen Sensorelements direkt auf diese Außenfläche aufgebracht werden. Mit anderen Worten wird bei dieser Variante das jeweilige Sensorelement durch eine Direktbeschichtung eines übergeordneten Geräts erzeugt, wobei dieses Gerät ggf. auch eine komplex geformte Außenkontur aufweisen kann.

Gemäß einer alternativen vorteilhaften Ausführungsvariante kann die Trägerschicht aber auch ein separates Substrat sein, welches insbesondere in einem nachfolgenden Schritt b) auf eine außenliegende Oberfläche eines übergeordneten Geräts aufgebracht wird. Diese Trägerschicht kann insbesondere eine flexible Folie sein, die durch die Aufbringung von ein oder mehreren Sensorelementen zu einer selbsttragenden Sensorhaut funktionalisiert wird. Eine solche Sensorhaut kann wiederum an eine komplex geformte Oberflächenkontur eines übergeordneten Geräts angepasst werden.

Nachfolgend wird die Erfindung anhand einiger bevorzugter Ausführungsbeispiele unter Bezugnahme auf die angehängten Zeichnungen beschrieben, in denen:
die Figuren 1 und 2 schematische Querschnittsdarstellungen einer Vorrichtung zur Detektion einer Druckkraft nach dem Stand der Technik zeigen,
die Figuren 3 und 4 schematische Querschnittsdarstellungen einer Vorrichtung zur Detektion einer Druckkraft nach einem ersten Beispiel der Erfindung zeigen,
Figur 5 einen Teilausschnitt einer solchen Vorrichtung während des Herstellungsschritts a) zeigt und
die Figuren 6 bis 8 schematische Darstellungen von ähnlichen Vorrichtungen nach weiteren Ausführungsbeispielen zeigen.

In den Figuren sind gleiche oder funktionsgleiche Elemente mit gleichen Bezugszeichen versehen.

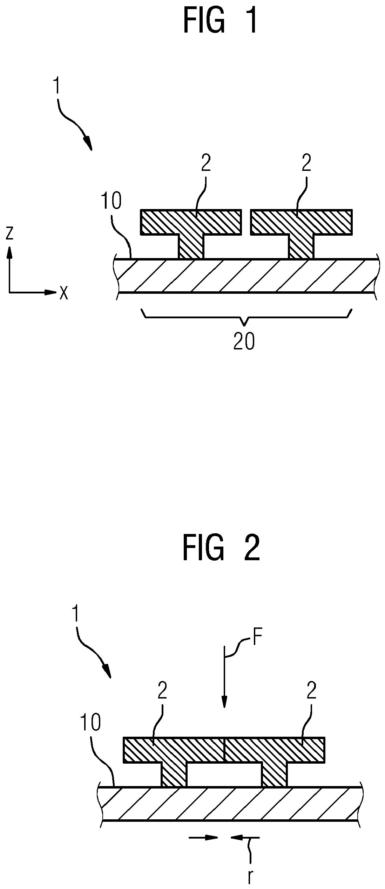

In Figur 1 ist eine schematische Querschnittsdarstellung einer Vorrichtung 1 gezeigt, mit der die Einwirkung einer äußeren Druckkraft detektiert werden kann. Das Funktionsprinzip dieser Vorrichtung entspricht im Wesentlichen der Vorrichtung aus der Patentanmeldung US 2021/0027955A1. Die Vorrichtung umfasst eine flexible Trägerschicht 10. Auf einer Oberfläche dieses Substrats sind mehrere T-förmige Verformungselemente 2 aufgebracht, von denen hier beispielhaft zwei gezeigt sind, und die jeweils eine hier nicht separat dargestellte Elektrode tragen. Diese Verformungselemente 2 bilden zusammen ein taktiles Sensorelement 20 aus. Wenn von außen eine Druckkraft F einwirkt, wie in Figur 2 gezeigt, kann dies zu einer Verformung dieser Elemente 2 und/oder zu einer Verformung des zugrundeliegenden flexiblen Substrats führen. Dies kann im Ergebnis eine gegenseitige Annäherung der oberen Balken der T-förmigen Verformungselemente 2 bewirken, wie in Figur 2 dargestellt. Durch diese Annäherung wird entsprechend auch ein Kontaktschluss zwischen den auf den Elementen 2 angeordneten Elektroden bewirkt, welcher als Änderung eines elektrischen Signals gemessen werden kann. Entsprechend kann der in Figur 1 gezeigte Zustand auch als OFF-Zustand und der in Figur 2 gezeigte Zustand als ON-Zustand der Vorrichtung bezeichnet werden. Die Vorrichtung bildet einen mit Hilfe der einwirkenden Druckkraft F bedienbaren Schalter. Wenn die einwirkende Druckkraft F wegfällt, kehrt der Schalter wieder in den OFF-Zustand der Figur 1 zurück.

Die Annäherung der Elemente 2 erfolgt entlang der Kontaktschlussrichtung r, welche hier parallel zur lokalen Substratebene liegt, in der lateralen x-Richtung. In vielen Anwendungsfällen wird die von außen einwirkende Druckkraft F senkrecht zur lokalen Substratebene liegen, also wie hier gezeigt in z-Richtung ausgerichtet sein oder zumindest eine starke Richtungskomponente in z-Richtung aufweisen. Die Kontaktschlussrichtung r liegt dann entweder senkrecht zu der Richtung der Druckkraft oder schließt einen entsprechend hohen Winkel mit ihr ein. Dies hat jedoch eine relativ geringe Genauigkeit bzw. Reproduzierbarkeit bei der Detektion einer bestimmten vorgegebenen Druckkraft zur Folge.

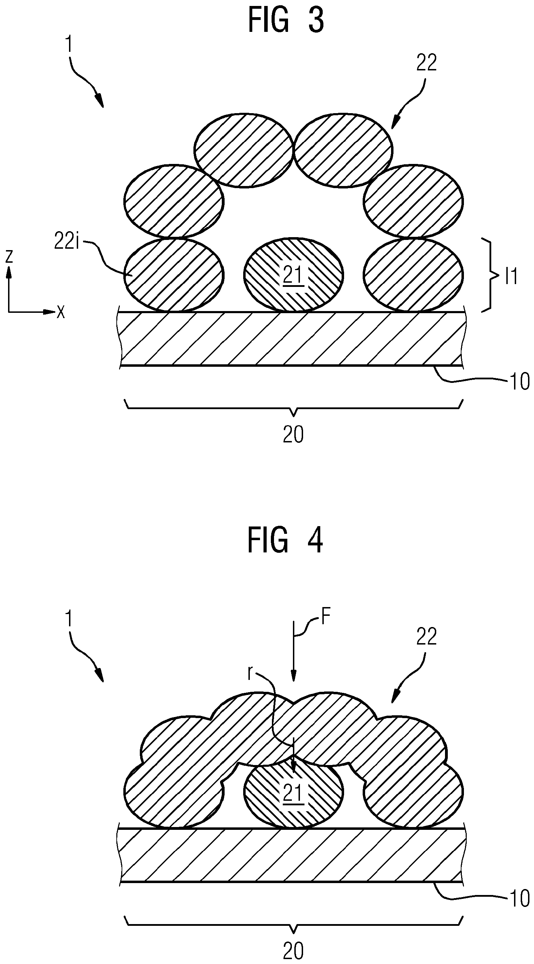

In Figur 3 ist eine schematische Querschnittsdarstellung einer Vorrichtung 1 zur Detektion einer Druckkraft nach einem ersten Beispiel der Erfindung gezeigt. Auch diese Vorrichtung 1 umfasst eine Trägerschicht 10, auf der ein taktiles Sensorelement 20 gebildet ist. Diese Trägerschicht 10 kann entweder flexibel oder starr ausgebildet sein. Beispielsweise kann es sich um eine flexible Folie oder aber auch um eine nichtleitende Oberfläche eines übergeordneten Geräts handeln, welche mit der Vorrichtung 1 funktionalisiert ist. Gezeigt ist hier nur ein Ausschnitt aus dem Trägersubstrat 10, welches in x- und oder y-Richtung mit ähnlichen weiteren Sensorelementen 20 funktionalisiert sein kann. So kann insgesamt ein ausgedehntes Array aus vielen solchen Sensorelementen gebildet sein.

Das jeweilige taktile Sensorelement 20 umfasst eine erste Elektrode 21 und eine zweite Elektrode 22, die auch hier durch die Einwirkung einer Druckkraft in elektrischen Kontakt gebracht werden können. Figur 3 zeigt dabei einen OFF-Zustand, bei denen kein solcher Kontakt vorliegt, und Figur 4 zeigt einen entsprechenden ON-Zustand dieser Vorrichtung, bei denen unter Einwirkung der Druckkraft F ein Kontakt zwischen den beiden Elektroden 21 und 22 geschlossen ist.

Die erste Elektrode 21 ist beispielsweise eine einfache Leiterbahn, welche direkt auf die Trägerschicht 10 aufgebracht ist. Die zweite Elektrode ist durch ein Verformungselement 22 gegeben, welches diese erste Elektrode im gezeigten xz-Querschnittsprofil kuppelartig umgibt. Dieses Verformungselement 22 ist aus einem reversibel verformbaren Material gebildet, so dass durch die Einwirkung der Druckkraft F das Verformungselement in Richtung der ersten Elektrode 21 gedrückt wird und es bei einer Überschreitung eines vorgegeben Schwellwerts für die Druckkraft zu einem elektrischen Kontaktschluss zwischen den beiden Elektroden 21, 22 kommt. Die Kontaktschlussrichtung r ist dabei im Wesentlichen in z-Richtung ausgerichtet, also vertikal zur lokalen Oberfläche der Trägerschicht 10. Somit liegt die Kontaktschlussrichtung r auch im Wesentlichen parallel zu der typischen Richtung der einwirkenden Druckkraft F oder schließt zumindest nur einen relativ geringen Winkel mit der relevanten Kraftrichtung ein. Hierdurch kann der für den Kontaktschluss maßgebliche Schwellwert wesentlich genauer eingestellt werden als beim Stand der Technik gemäß den Figuren 1 und 2.

Beim Beispiel der Figur 3 ist die zweite Elektrode 22 durch das kuppelartige Verformungselement selbst gebildet. Alternativ kann diese Elektrode auch ein Teilelement des Verformungselements oder eine innenliegende Beschichtung auf dem Verformungselement darstellen. Wesentlich ist nur, dass es bei einem Eindrücken der Kuppel zu einem Kontaktschluss mit der innenliegenden ersten Elektrode 21 kommen kann.

Beim Beispiel der Figur 3 ist das kuppelartige Verformungselement 22 durch einen Druckprozess auf die Trägerschicht 10 aufgebracht worden. Beispielsweise kann es sich bei einem solchen Druckprozess um ein Dispens-Prozess handeln, bei dem mehrere raupenartige Teilelemente 22i nacheinander (oder teilweise auch gleichzeitig) aufgetragen werden. Diese Teilelemente 22i sind in Figur 3 nur äußerst schematisch durch ovale Querschnittsformen wiedergegeben. Sie liegen in mehreren Schichten übereinander, und die gegenüberliegenden Teilelemente kommen sich nach oben hin immer näher, so dass insgesamt eine Kuppelform erzeugt ist. In einem realen Bauteil wird die Querschnittsform der einzelnen Dispenserraupen 22i jedoch nicht so perfekt oval sein wie in dieser schematischen Darstellung und sie werden sowohl die Trägerschicht 10 als auch die jeweils darunterliegende Dispenserraupe 22i etwas stärker benetzen, so dass die Teilelemente des Verformungselements etwas stärker miteinander verbunden sind als in der schematischen Darstellung der Figur 3 angedeutet. In der untersten Teilschicht 11 dieses additiv hergestellten Verformungselements ist außerdem die erste Elektrode 21 angeordnet. Diese erste Elektrode 21 kann in demselben Druckprozess zusammen mit der ersten Teilschicht 11 des Verformungselements 22 hergestellt worden sein. Es kann vorteilhaft aus demselben Material gebildet sein, beispielsweise aus einer Silikonleitpaste. Alternativ sind für die erste Elektrode 21 jedoch auch andere Materialien und andere Aufbringungsverfahren möglich. Wesentlich ist, dass das kuppelartige Verformungselement ausreichend reversibel verformbar ist und dass dieses entweder selbst leitfähig ist oder eine Elektrode aus einem leitfähigen Material trägt.

Das taktile Sensorelement 20 der Figuren 3 und 4 kann in der hier nicht dargestellten y-Richtung eine längliche Form aufweisen. So kann es sich bei der innenliegenden ersten Elektrode um eine länglich ausgedehnte Leiterbahn handeln, und die kuppelartige zweite Elektrode kann diese Leiterbahn tunnelartig umgeben. Eine solche Tunnelröhre kann insbesondere durch eine entsprechende Stapelung von länglichen Dispenserraupen aufgebaut werden.

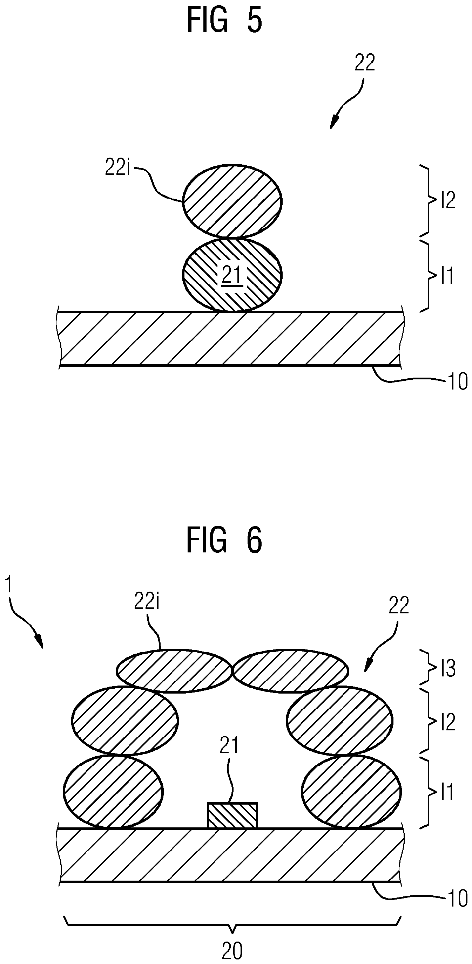

Figur 5 zeigt einen Teilausschnitt einer entsprechenden Vorrichtung während des Herstellungsschritts a), bei dem das Verformungselement 22 durch einen Druckprozess gebildet wird. Der Übersichtlichkeit halber sind hier nur zwei Teilelemente 22i eines solchen Verformungselements 22 gezeigt, die jeweils durch längliche Dispenserraupen gebildet sind. Beim Prozessstadium der Figur 1 wurde zunächst eine untere Dispenserraupe in einer ersten Teilschicht 11 auf die Trägerschicht 10 aufgebracht. Diese Dispenserraupe wurde danach angehärtet, wie durch die etwas dichtere Schraffierung angedeutet ist. Auf diese vorgehärtete Dispenserraupe wurde in einem nachfolgenden Teilschritt des Druckprozesses die obere Dispenserraupe der zweiten Teilschicht 12 aufgebracht. In nachfolgenden Prozessschritten kann dann auch diese Teilschicht 12 vorgehärtet werden, und es können optional auch weitere Teilschichten auf diese Struktur aufgebracht werden. So kann durch eine Vielzahl von Teilschritten eine entsprechende Kuppelstruktur ähnlich wie bei den Beispielen der Figuren 3, 4 und 6 bis 8 sukzessive aufgebaut werden.

Figur 6 zeigt eine schematische Querschnittsdarstellung einer Vorrichtung 1 nach einem zweiten Ausführungsbeispiel der Erfindung. Die Vorrichtung 1 ist ähnlich aufgebaut wie beim Beispiel der Figuren 3 und 4, und auch sie kann ein oder mehrere taktile Sensorelemente 20 auf einer nichtleitenden Trägerschicht 10 aufweisen. Auch hier ist die zweite Elektrode 22 durch ein kuppelartiges Verformungselement aus einem gedruckten elastischen und elektrisch leitfähigen Material gebildet. Dieses Material ist in mehreren Schichten 11 bis 13 gedruckt, wobei die hier gezeigte Anzahl von drei Schichten nur beispielhaft zu verstehen ist und auch für eine wesentlich größere Anzahl von Teilschichten stehen kann. Das Beispiel der Figur 6 soll dabei verdeutlichen, dass die einzelnen Teilschichten unterschiedlich dick ausgestaltet sein können, um eine besonders gute Anpassung des Verformungselements an eine Zielgeometrie zu ermöglichen. So ist hier beispielhaft die oberste Teilschicht 13 dünner ausgeprägt als die darunterliegenden. Alternativ kann die Schichtdicke aber auch nach oben hin dicker werden, oder die Schichtdicke kann über den Stapel an Teilschichten ggf. unregelmäßig variieren.

Alternativ oder zusätzlich können die einzelnen Teilelemente der jeweiligen Teilschichten - die hier wiederum als längliche Dispenserraupen 22i gebildet sind - auch in ihrer Breite variieren. Beispielhaft ist in Figur 6 gezeigt, dass die Teilelemente 22i der oberen Schichten 12,13 etwas breiter sind als die darunterliegenden. Alternativ zu den hier gezeigten Beispielen ist es allgemein auch möglich, dass die Seitenwände der kuppelartigen Verformungswände jeweils nicht nur aus einer Dispenserraupe pro Teilschicht gebildet sind, sondern dass jeweils mehrere Dispenserraupe nebeneinanderliegen und somit eine entsprechend dickere oder zumindest feinteiliger zusammengesetzte Kuppelwand bilden.

Die obenstehenden Ausführungen bezüglich der unterschiedlichen Dicken der Teilschichten 11 bis 13 und der unterschiedlichen Breiten der Teilelemente 22i sollen allgemein gelten und nicht auf die spezielle Ausführungsform mit länglichen Dispenserraupen und tunnelartiger Geometrie des Verformungselements begrenzt sein. So kann beispielsweise auch ein igluartiges Verformungselements mit rundem oder ovalem Grundriss ausgebildet werden, indem in den einzelnen Teilschichten Kreise oder Ovale aus ringförmig geschlossenen Dispenserraupen aufgetragen werden. So kann eine am Boden ringförmig geschlossene Kuppel durch ein mehrschichtiges additives Fertigungsverfahren erzeugt werden.

Nur beispielhaft ist bei der Vorrichtung der Figur 6 die innenliegende erste Elektrode 21 nicht durch eine gedruckte Dispenserraupe, sondern durch eine metallische Leiterbahn gebildet. Eine solche Ausgestaltung der ersten Elektrode kommt auch bei allen anderen Ausführungsformen in Frage.

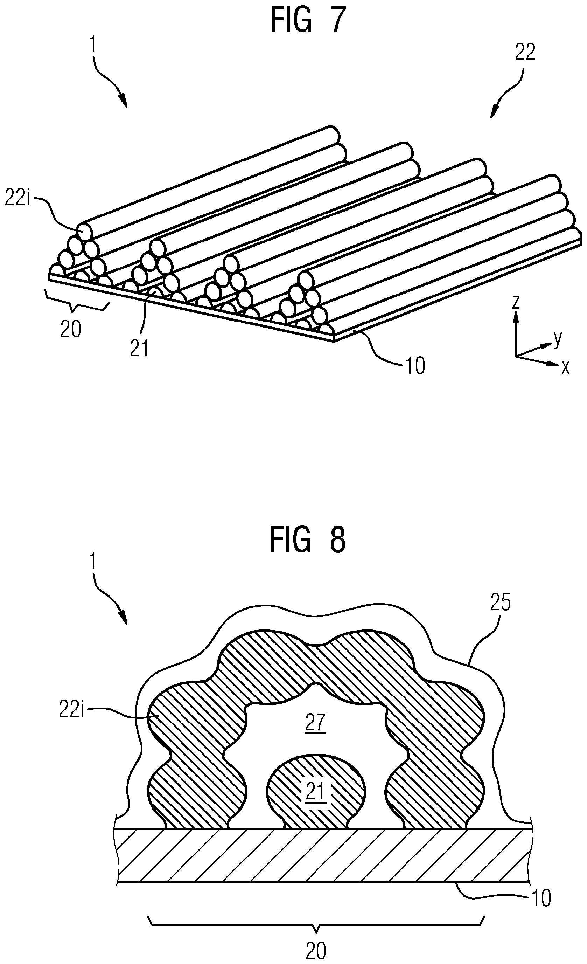

Figur 7 zeigt eine schematische perspektivische Darstellung einer Vorrichtung 1 nach einer weiteren Ausführungsform der Erfindung. Gezeigt ist ein Ausschnitt aus einer Trägerschicht 10, der in diesem Beispiel vier taktile Sensorelemente 20 (oder zumindest Teilabschnitte von solchen Sensorelementen) aufweist. Die einzelnen Sensorelemente 20 sind jeweils ähnlich aufgebaut wie beim Beispiel der Figuren 3 und 4 mit dem Unterschied, dass die kuppelartigen Verformungselemente 22 hier auf ihrer Oberseite nicht rund ausgestaltet sind, sondern spitz zulaufen. In dieser perspektivischen Darstellung ist die längliche Form der einzelnen Sensorelemente 20, die sich in y-Richtung erstrecken, gut zu erkennen. Jedes Sensorelement 20 weist eine längliche innenliegende Leiterbahn als erste Elektrode 21 und ein tunnelartig geformtes Verformungselement als zweite Elektrode 22 auf.

Die Vorrichtung 1 der Figur 7 kann eine pixelierte Sensor-Vorrichtung sein, bei der die einzelnen Sensorelemente 20 jeweils einzelne Sensorpixel bilden, um so eine ortsaufgelöste Detektion der einwirkenden Druckkraft zu ermöglichen. Alternativ können die vier Sensorelemente 20 aber auch zu einem übergeordneten Pixel gehören und somit einzelne Sub-Pixel ausbilden. Diese Sub-Pixel können sich dann gezielt in ihrer Empfindlichkeit unterscheiden, so dass bei jedem Sub-Pixel ein anderer Schwellwert für die Druckkraft benötigt wird, um die beiden Elektroden 21, 22 miteinander in Kontakt zu bringen. Aus dem ausgelesenen elektrischen Signal kann dann auf die Anzahl der miteinander kontaktierten Elektrodenpaare geschlossen werden und somit die einwirkende Druckkraft innerhalb bestimmter Eckpunkte quantifiziert werden. So kann insgesamt eine sowohl ortsauflösende als auch quantitativ messende Sensor-Vorrichtung zur Verfügung gestellt werden, wenn die Trägerschicht 10 auf weiteren, hier nicht gezeigten Teilbereichen ähnliche Sensor-Pixel aufweist.

In Figur 8 ist eine schematische Querschnittsdarstellung einer Vorrichtung 1 nach einer weiteren Ausführungsform gezeigt. Das hier dargestellte Sensorelement 20 ist insgesamt ähnlich aufgebaut wie beim Beispiel der Figuren 3 und 4. Nur beispielhaft ist hier die Unterstrukturierung des Verformungselements 22 in einzelne Teilelemente 22i etwas stärker verwischt, da die einzelnen Dispenserraupen sich gegenseitig und auch die Trägerschicht stärker benetzen. Dies gilt auch für die in entsprechender Weise gebildete erste Elektrode 21.

Wie aber bereits oben erwähnt, ist die ausgeprägte Trennung in einzelne Teilelemente in den Figuren 3 bis 7 etwas übertrieben dargestellt. Ein wesentlicherer Unterschied beim Beispiel der Figur 8 liegt darin, dass hier das Verformungselement 22 von einer außenliegenden Schutzschicht 25 umhüllt ist. Dabei kann es sich beispielsweise um eine nichtleitende flexible Polymerschicht handeln, welche die Vorrichtung gegen mechanische, chemische und/oder elektrische Umgebungseinflüsse schützen kann. Eine solche zusätzliche Schutzschicht kann auch bei den anderen Beispielen vorgesehen sein. Insbesondere kann sie mehrere benachbarte Sensorelemente 20 einer solchen Vorrichtung (wie beim Beispiel der Figur 7) gemeinsam überdecken, wie dies auch in den Randbereichen des Ausschnitts der Figur 8 angedeutet ist. Eine solche Schutzschicht 25 kann beispielsweise durch eine auflaminierte Polymerfolie oder durch einen aus flüssiger Phase abgeschiedenen und anschließend gehärteten Film gebildet sein. Allgemein eignet sich der erfindungsgemäße Aufbau der Sensorelemente besonders gut, um nach außen hin durch eine solche Schutzschicht geschützt zu werden, da im Unterschied zur herkömmlichen Vorrichtung der Figuren 1 und 2 keine lateralen Abstände zwischen einzelnen Elektroden vorgesehen sind. Die Hohlräume 27 innerhalb der einzelnen kuppelartigen Verformungselemente können dabei - falls es sich um tunnelförmige Verformungselemente handelt - entweder in den lateralen Randbereichen ebenfalls durch die Schutzschicht 25 nach außen abgeschlossen sein oder sie können alternativ im Bereich der Tunnelenden offenliegen.

### Bezugszeichenliste

- 1: Vorrichtung
- 2: Verformungselemente
- 10: Trägerschicht
- 20: taktiles Sensorelement
- 21: erste Elektrode
- 22: zweite Elektrode (Verformungselement)
- 22i: Teilelement (Dispenserraupe)
- 25: Schutzschicht
- 27: Hohlraum
- F: Druckkraft
- 11: erste Teilschicht
- 12: zweite Teilschicht
- 13: dritte Teilschicht
- r: Kontaktschlussrichtung
- x,y: laterale Richtungen
- z: vertikale Richtung

## Patentansprüche

1. Vorrichtung (1) zur Detektion einer von außen auf die Vorrichtung (1) einwirkenden Druckkraft (F),
- wobei die Vorrichtung (1) eine elektrisch nichtleitende Trägerschicht (10) und wenigstens ein taktiles Sensorelement (20) umfasst,
- wobei das taktile Sensorelement (20) eine erste Elektrode (21) und eine zweite Elektrode (22) aufweist,
- wobei die erste Elektrode (21) auf der Trägerschicht (10) aufgebracht ist,
- wobei die erste Elektrode (21) auf ihrer von der Trägerschicht (10) abgewandten Seite von einem kuppelartigen Verformungselement (22) umgeben ist,
- wobei das kuppelartige Verformungselement (22) aus einem reversibel verformbaren Material gebildet ist, welches die zweite Elektrode (22) ausbildet oder die zweite Elektrode auf ihrer Innenseite trägt,
- so dass die Einwirkung einer Druckkraft (F) auf das kuppelartige Verformungselement (22) einen reversiblen Kontaktschluss zwischen der ersten Elektrode (21) und der zweiten Elektrode (22) bewirken kann.

2. Vorrichtung (1) nach Anspruch 1, bei welcher die zweite Elektrode des wenigstens einen Sensorelements (20) durch dessen kuppelartiges Verformungselement (22) gebildet ist.

3. Vorrichtung (1) nach Anspruch 1, bei welcher die zweite Elektrode (22) des wenigstens einen Sensorelements durch eine leitfähige Beschichtung auf der Innenseite des kuppelartigen Verformungselements gebildet ist.

4. Vorrichtung (1) nach einem der vorhergehenden Ansprüche, bei welcher das kuppelartige Verformungselement (22) aus einem gedruckten reversibel verformbaren Material gebildet ist.

5. Vorrichtung (1) nach Anspruch 4, bei welcher das kuppelartige Verformungselement (22) aus einem mehrschichtig gedruckten Aufbau aus dem reversibel verformbaren Material gebildet ist.

6. Vorrichtung (1) nach einem der Ansprüche 4 oder 5, bei welchem das gedruckte reversibel verformbare Material elektrisch leitfähig ist und insbesondere aus einer silikonbasierten leitfähigen Paste gebildet ist.

7. Vorrichtung (1) nach einem der vorhergehenden Ansprüche, bei welcher das wenigstens eine Sensorelement (20) eine längliche Form aufweist,
- wobei die erste Elektrode (21) als längliche Leiterbahn ausgebildet ist
- und wobei das Verformungselement (22) die erste Elektrode nach Art einer Tunnelröhre umgibt.

8. Vorrichtung (1) nach einem der vorhergehenden Ansprüche, bei welcher das kuppelartige Verformungselement (22) auf seiner Außenseite von einer durchgehenden Schutzschicht (25) bedeckt ist.

9. Vorrichtung (1) nach einem der vorhergehenden Ansprüche, welche eine Mehrzahl von taktilen Sensorelementen (20) umfasst.

10. Vorrichtung (1) nach einem der vorhergehenden Ansprüche, welche eine unebene und/oder reversibel verformbare Trägerschicht (10) aufweist.

11. Verfahren zur Herstellung einer Vorrichtung (1) nach einem der vorhergehenden Ansprüche, welches zumindest den folgenden Schritt aufweist:
a) Aufbringung des kuppelartigen Verformungselements (22) auf die Trägerschicht (10) mittels eines Druckprozesses.

12. Verfahren nach Anspruch 11, bei welcher der in Schritt a) angewendete Druckprozess ein Dispens-Prozess, ein Inkjet-Prozess oder ein Aerosol-Jet-Prozess ist.

13. Verfahren nach einem der Ansprüche 11 oder 12, bei welchem der Druckprozess in Schritt a) in mehreren Teilschritten aᵢ) durchgeführt wird, wobei in jedem Teilschritt aᵢ) eine Teilschicht (11,12,13) eines mehrschichtigen Verformungselements (22) aufgedruckt wird.

14. Verfahren nach einem der Ansprüche 11 bis 13, bei welchem die Trägerschicht (10) eine außenliegende nichtleitende Schicht eines übergeordneten Geräts ist,
wobei in Schritt a) die Aufbringung des Verformungselements (22) direkt auf diese außenliegende Schicht des übergeordneten Geräts erfolgt.

15. Verfahren nach einem der Ansprüche 11 bis 13, bei welchem die Trägerschicht (10) ein separates Substrat ist, welches insbesondere in einem nachfolgenden Schritt b) auf eine außenliegende Oberfläche eines übergeordneten Geräts aufgebracht wird.
